# EUROPEAN PATENT APPLICATION

(11) **EP 2 530 398 A2**
(43) Date of publication of application: **05.12.2012**
(21) Application number: 12170694.9
(22) Date of filing: 04.06.2012
(51) Int. Cl.: F24H 4/02, F24H 4/04, F24H 9/14, F24D 3/18

(54) **Heat pump hydronic heater**

(30) Priority: 02.06.2011 JP 2011123937
(71) Applicant: Panasonic Corporation, Osaka 571-8501 (JP)
(72) Inventor: Nakatani, Kazuhito, Chuo-ku, OSAKA, 540-6207 (JP); Nishihara, Yoshikazu, Chuo-ku, OSAKA, 540-6207 (JP); Ishihara, Hiroshi, Chuo-ku, OSAKA, 540-6207 (JP); Fukunaga, Toshikatsu, Chuo-ku, OSAKA, 540-6207 (JP)
(74) Representative: Eisenführ, Speiser & Partner

(57) **Abstract**

According to a heat pump hydronic heater of the present invention, the heating medium outward port 21 and the heating medium return port 23 are connected to an external radiator 2 through a heating medium pipe 3; a heating medium heated by the water refrigerant heat exchanger 5 circulates in the external radiator 2 and the heating medium dissipates heat in the external radiator 2; the heating medium outward port 21 and the heating medium return port 23 are inclined rearward and downward and disposed on a side of the sheath body 36; the heat pump hydronic heater of the invention has high workability, efficiency thereof can be enhanced; maintenance performance thereof is excellent; and the heat pump hydronic heater can be designed compactly.

## Description

### [Technical Field]

The present invention relates to a heat pump hydronic heater which heats a heating medium such as water and antifreezing liquid to warm up a room.

### [Background Technique]

As a conventional heat pump hydronic heater of this kind, there is one including a refrigerant circuit, a cistern and a circulation.
The refrigerant circuit is formed by annularly connecting a compressor, a water refrigerant heat exchanger, decompressing means and an evaporator to one another. The water refrigerant heat exchanger receives supply of a refrigerant from this refrigerant circuit, and heats water. The cistern is connected to this water refrigerant heat exchanger. The circulation pump supplies hot water to a separated place. An outdoor unit is vertically divided by a horizontal parting plate. The cistern, the circulation pump and a hot water header are placed above the horizontal parting plate (see patent documents 1 and 2 for example).

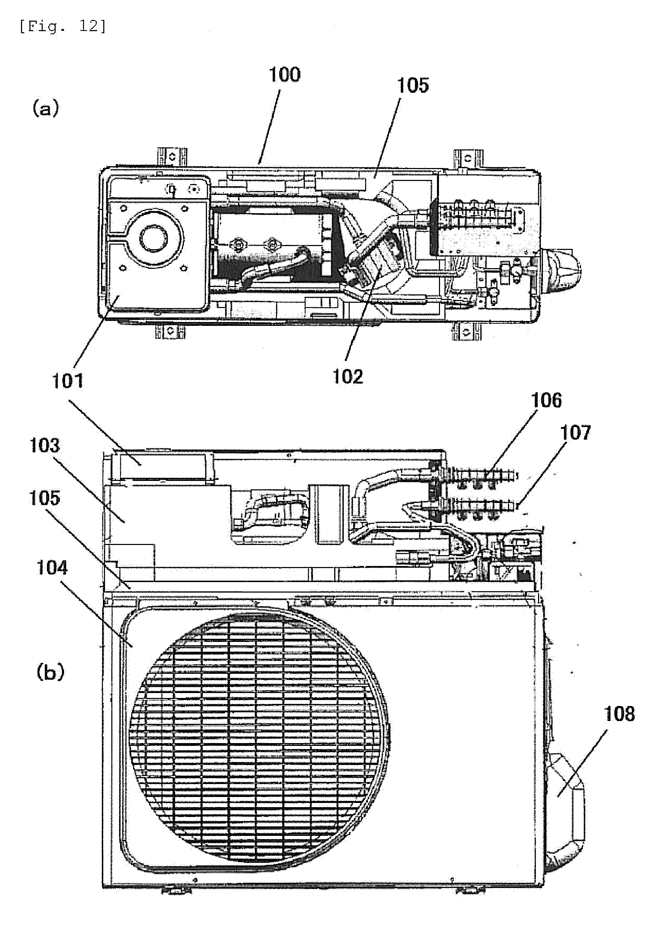

Figs. 12 are upper surface interior views and a front interior view of a conventional heat pump hydronic heater 100 described in patent document 1.

A outdoor unit 100 includes a cistern 101 and a circulation pump 102. The cistern 101 replenishes a heating medium such as water and antifreezing liquid, and functions as a buffer of an expanded heating medium. The circulation pump 102 supplies hot water to an external radiator 110 (such as floor heating system and fan convector) installed at a separated place. An entire periphery of the outdoor unit 100 is covered with an exterior frame 103. An interior of the outdoor unit 100 is vertically divided by a vertically-parting plate 105, a heat pump apparatus 104 is disposed below the vertically-parting plate 105, and the cistern 101 and the circulation pump 102 are disposed above the vertically-parting plate 105.
A heating medium outward port 106 and a heating medium return port 107 are disposed above the vertically-parting plate 105. The heating medium outward port 106 and the heating medium return port 107 connect the external radiator 110 and a pipe 109 to each other. The heating medium outward port 106 and the heating medium return port 107 are also disposed above the horizontal parting plate 105 such that they are oriented sideway. A pipe cover 108 in which a power supply line or the like is accommodated is provided on a right side of the heat pump apparatus 104.

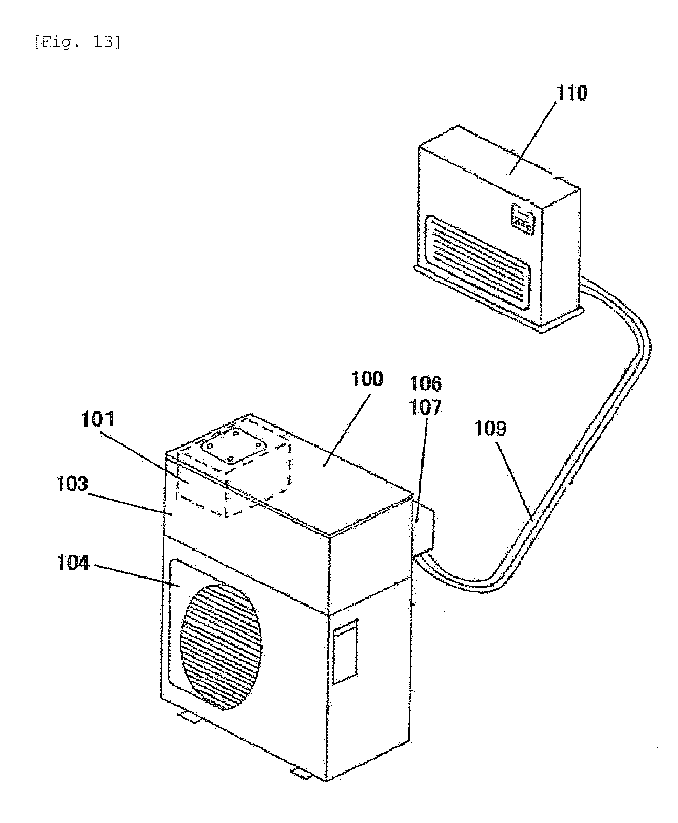

Fig. 13 is a working diagram in which the pipe 109 through which a heating medium is circulated to the outdoor unit 100 is connected to the external radiator 110 shown in Fig. 12. The heating medium outward port 106, the heating medium return port 107 disposed on an upper and rear portion of the heat pump apparatus 104 and the pipe 109 are connected to each other, and they are connected to the external radiator 110 through a rear portion of the outdoor unit 100.

### [Prior Art Documents]

### [Patent Documents]

[Patent Document 1] Japanese Patent Application Laid-open No.2010-144986
[Patent Document 2] Japanese Patent Application Laid-open No.2010-169273

### [Summary of the Invention]

### [Problem to be Solved by the Invention]

However, the configurations of patent documents 1 and 2 have a problem that since the cistern 101 and the circulation pump 102 are disposed above the outdoor unit 100, a sheath body becomes large, and conditions that the outdoor unit 100 is installed are limited.
Further, since the heating medium outward port 106 and the heating medium return port 107 exist above the vertically-parting plate 105, the pipe 109 connected to the heating medium outward port 106 and the heating medium return port 107 becomes long, and there is a problem that efficiency is deteriorated.

The present invention has been accomplished to solve the above problems, and it is an object of the invention to provide a heat pump hydronic heater having high workability and improved efficiency.

### [Means for Solving the Problems]

To solve the conventional problems, the present invention provides a heat pump hydronic heater in which a compressor, a water refrigerant heat exchanger, decompressing means and an evaporator which configure a refrigerant circuit are accommodated in a sheath body, the sheath body has a heating medium outward port and a heating medium return port connected to the water refrigerant heat exchanger through a hot water circuit, the heating medium outward port and the heating medium return port are connected to an external radiator through a heating medium pipe, a heating medium heated by the water refrigerant heat exchanger circulates in the external radiator, and the heating medium dissipates heat in the external radiator, characterized in that the heating medium outward port and the heating medium return port are disposed on a side of the sheath body such that these ports are inclined rearward and downward.

### [Effect of the Invention]

According to the present invention, it is possible to provide a heat pump hydronic heater having high workability and improved efficiency.

### [Brief Description of the Drawings]

Fig. 1 is an interior side view of a heat pump hydronic heater according to a first embodiment of the present invention;
Fig. 2 is an interior side view of the heat pump hydronic heater;
Fig. 3 is a rear interior perspective view of the heat pump hydronic heater;
Fig. 4 is a front interior perspective view of the heat pump hydronic heater;
Fig. 5(a) is a front exterior perspective view of the heat pump hydronic heater and Fig. 5(b) is a rear exterior perspective view of the heat pump hydronic heater;
Fig. 6 is a refrigerant circuit and hot water circuit diagram of the heat pump hydronic heater;
Fig. 7 is a working perspective view of the heat pump hydronic heater;
Fig. 8 is a working perspective view of the heat pump hydronic heater;
Fig. 9 is a working side view of the heat pump hydronic heater;
Fig. 10 is a working side view of the heat pump hydronic heater;
Fig. 11 is a working side view of the heat pump hydronic heater;
Fig. 12(a) is an interior upper surface view of a conventional heat pump hydronic heater and Fig. 12(b) is a front view of the conventional heat pump hydronic heater; and
Fig. 13 is an exterior working diagram of the conventional heat pump hydronic heater.

### [Explanation of Symbols]

- 2: external radiator
- 3: heating medium pipe
- 4: compressor
- 5: water refrigerant heat exchanger
- 7: evaporator
- 8: refrigerant circuit
- 15: hot water circuit
- 16: circulation pump
- 17: cistern
- 21: heating medium outward port
- 23: heating medium return port
- 36: sheath body
- 47: rear sheath body

### [Mode for Carrying Out the Invention]

A first aspect of the invention provides a heat pump hydronic heater in which a compressor, a water refrigerant heat exchanger, decompressing means and an evaporator which configure a refrigerant circuit are accommodated in a sheath body, the sheath body has a heating medium outward port and a heating medium return port connected to the water refrigerant heat exchanger through a hot water circuit, the heating medium outward port and the heating medium return port are connected to an external radiator through a heating medium pipe, a heating medium heated by the water refrigerant heat exchanger circulates in the external radiator, and the heating medium dissipates heat in the external radiator, characterized in that the heating medium outward port and the heating medium return port are inclined rearward and downward, and are disposed on a side of the sheath body.
According to the heat pump hydronic heater, it is necessary to mount the heating medium pipe to the heating medium outward port and the heating medium return port at the time of construction, but since the mounting portion is inclined rearward and downward, the heating medium pipe to be connected is also mounted such that it is inclined rearward and downward.
Hence, when the heating medium pipe connected to the heating medium outward port and the heating medium return port is routed toward the evaporator of the outdoor unit, there is fear that the heating medium pipe closes the evaporator. However, since the heating medium outward port and the heating medium return port are inclined rearward and downward and in accordance with this configuration, the heating medium pipe is also disposed rearward and downward, and it is possible to prevent the heating medium pipe from closing the evaporator. Hence, as compared with a case where the heating medium pipe does not pass through a back surface of the evaporator, the same amount of air passing through the evaporator can be secured, deterioration in performance is prevented, and it is possible to obtain the heat pump hydronic heater having energy saving effect.
Further, since the heating medium outward port and the heating medium return port are disposed on the side, it is easy to connect the heating medium pipe. Therefore, the construction performance is enhanced and construction time can be shortened. Especially since this location is substantially the same as a location to which the refrigerant pipe of an air conditioner is connected, the same construction as that of the air conditioner can be employed, and even a non-skilled construction operator can easily construct.
Further, since a power supply line is also connected to a right side of the outdoor unit, it is necessary to secure a constant distance from the sidewall as a maintenance space, but if the heating medium pipe is routed rightward, its space can be utilized effectively.

According to a second aspect of the invention, the heating medium outward port and the heating medium return port are inclined rearward and downward by 8° or more and 20° or less with respect to a horizontal direction.
If this inclination is excessively large, since the heating medium pipe to be connected is oriented downward, a distance from a lower installation surface becomes small, and a radius of curvature of the heating medium pipe becomes small. Especially when a heating medium pipe is made of crosslinked polyethylene, there is a possibility that the heating medium pipe becomes bleached, the heating medium pipe is deteriorated when it is used for long periods, and heating medium pipe becomes cracked.
If this inclination is much smaller than 10°, the heating medium pipe to be connected is oriented substantially horizontally. Hence, when the body back surface is routed toward the evaporator, there is a possibility that the heating medium pipe closes the evaporator. In this case, there is fear that the amount of passing air is reduce, and performance is deteriorated. Therefore, it is preferable the heating medium outward port and the heating medium return port are inclined downward by about 10°.

According to a third aspect of the invention, the heating medium outward port is disposed outside of the sheath body, and the heating medium return port is disposed inside of the sheath body.
There is fear that the heating medium pipes close the evaporator when the heating medium pipes connected to the heating medium outward port and the heating medium return port are routed in the left direction of the outdoor unit of the heat pump hydronic heater. However, the heating medium outward port is disposed outward of the heating medium return port. Therefore, when the heating medium pipes are routed toward the back surface of the outdoor unit, the high temperature heating medium which flows out from the heating medium outward port passes outside and exchanges heat by the external radiator and the temperature of the heating medium becomes low. The low temperature heating medium passes in the vicinity of the outdoor unit and the evaporator, and returns to the heating medium return port.
At this time, the evaporator is in a low temperature state. The pipe through which a high temperature heating medium flows is disposed at a location separated from the low temperature evaporator. The heating medium pipe whose temperature is lowered is disposed at an inner location. According to this configuration, a high temperature side of the heating medium pipe is not cooled, the heating medium is sent to the external radiator while maintaining its high temperature. The heating medium which dissipates heat in the external radiator passes through a position close to the evaporator, temperature of the heating medium is further lowered and the heating medium is sent to the water refrigerant heat exchanger. Hence, COP can be enhanced and the energy-saving technology can further be enhanced.

According to a fourth aspect of the invention, the heat pump hydronic heater further includes at least one more heating medium outward port and at least one more heating medium return port, the plurality of heating medium outward ports are arranged side by side in a vertical direction, and the plurality of heating medium return ports are arranged side by side in the vertical direction.
According to this configuration, the heating medium pipes connected to the heating medium outward port and the heating medium return port can compactly be accommodated below the outdoor unit, it becomes easy to route the pipe and the construction performance is enhanced.
The heating medium outward port and the heating medium return port are arranged vertically and they are disposed substantially horizontally. According to this configuration, the plurality of heating medium outward ports and the plurality of heating medium return ports can be disposed collectively below the side of the outdoor unit.
Especially when the plurality of heating medium pipes are routed in the left direction of the heat pump hydronic heater, there is fear that the heating medium pipes close the evaporator. However, since the heating medium outward ports and the heating medium return ports are collectively disposed, the pipes can be arranged at the lower location compactly.
According to this configuration, it is possible to route the heating medium pipes such that the heating medium pipes do not close the evaporator which exchanges heat, and construction can easily be carried out such that the performance is not deteriorated by the construction.

According to a fifth aspect of the invention, the heat pump hydronic heater further includes a cistern in which the heating medium is stored, and a circulation pump which circulates the heating medium, and the circulation pump and the cistern are disposed such that they project rearward of the sheath body.
When the heating medium pipes connected to the heating medium outward port and the heating medium return port are routed in the left direction of the heat pump hydronic heater, there is fear that the heating medium pipes close the evaporator, but the heating medium pipe is rearwardly mounted on the right side of the outdoor unit, and the heating medium pipe is made to pass below the rear sheath body which projects rearward of the outdoor unit in the convex form. According to this configuration, it is possible to prevent the heating medium pipes from moving upward.
Therefore, it is possible to prevent the heating medium pipes from closing the evaporator. It is possible to avoid a case where an amount of air which passes through the evaporator is reduced, the performance is deteriorated and a power consumption amount is increased, and the heat pump hydronic heater having excellent energy-saving technology can be obtained.
Here, the heating medium pipe is routed in the left direction of the outdoor unit, but when the heating medium pipe is routed in the right direction, since the evaporator is not closed, no problem occurs. When the heating medium pipe is routed rearward also, no problem occurs. The problem in terms of performance occurs only when the heating medium pipe is routed in the right direction.

According to a sixth, the heating medium outward port is a thermally-actuated valve.
The thermally-actuated valve opens and closes in accordance with the external radiators which are used, and the thermally-actuated valve is controlled so that hot water flows only to a necessary external radiator. A flow rate of heated heating medium can be controlled in accordance with status of use of the external radiator, and usability and energy-saving technology are enhanced.

According to a seventh aspect of the invention, the heat pump hydronic heater further includes a pipe cover which covers the heating medium outward port and the heating medium return port, and the pipe cover is made of resin having ultraviolet light-transmission preventing effect.
A crosslinked polyethylene pipe which is also generally used as a heating medium pipe is deteriorated by ultraviolet light and there is fear that the heating medium pipe becomes cracked. Hence, the heating medium pipe is covered with a covering material.
However, at the connected portions between the heating medium outward port, the heating medium return port and the crosslinked polyethylene pipe, the crosslinked polyethylene is bared. Hence, since the connected portions are covered with the pipe cover made of resin having the ultraviolet light-transmission preventing effect, it is possible to prevent the connected portions from being deteriorated by ultraviolet light, and equality can be secured for long periods.

Embodiments of the present invention will be described with reference to the drawings. The invention is not limited to the embodiments.

### (First Embodiment)

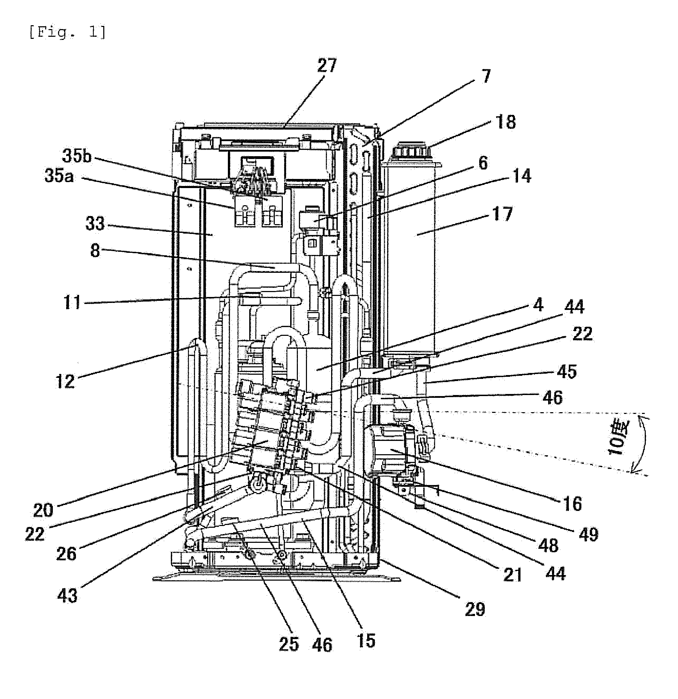

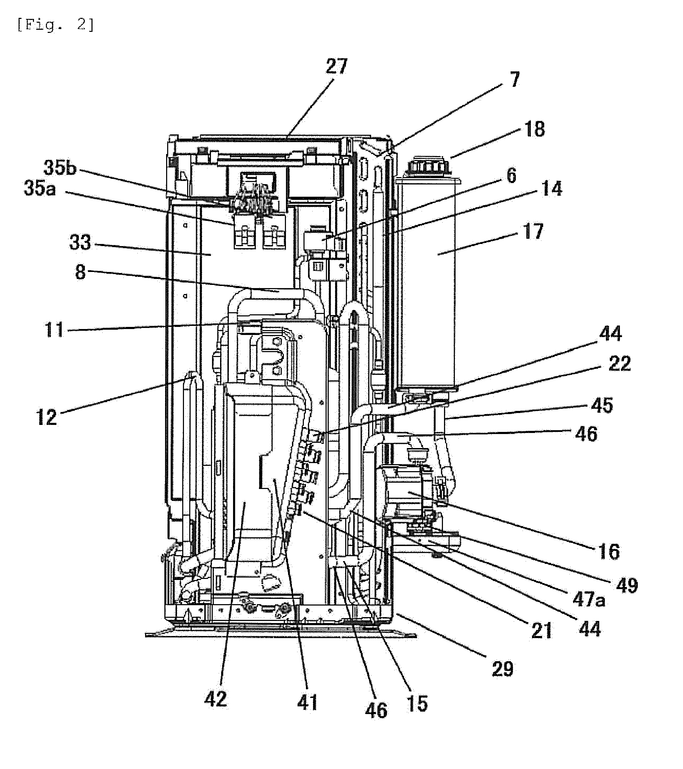

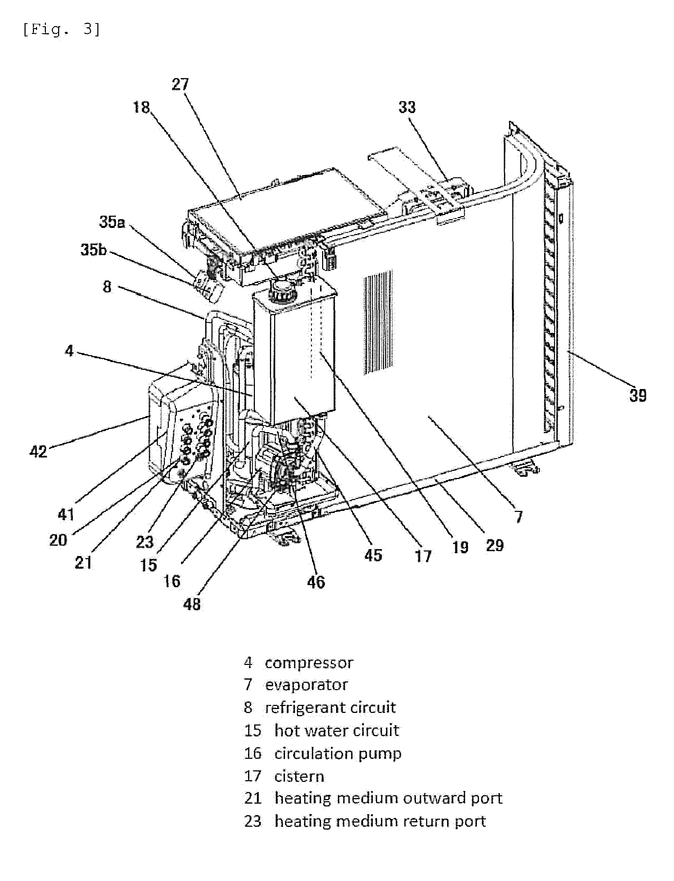

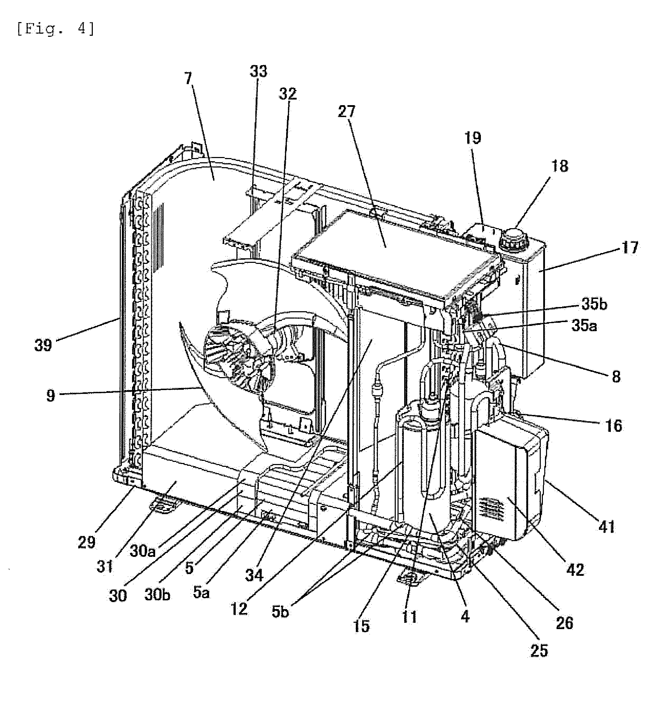

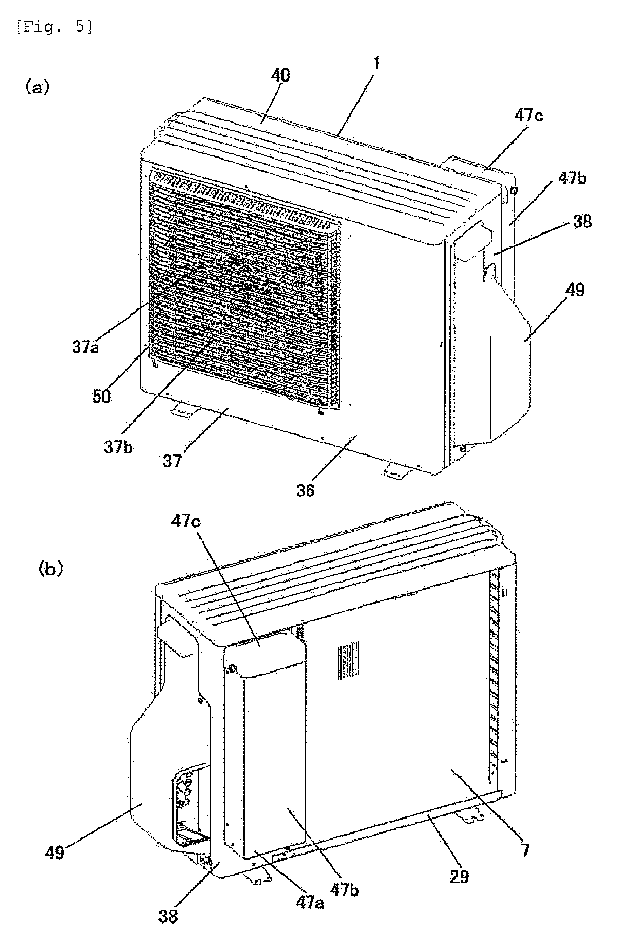

Fig. 1 is an interior side view of a heat pump hydronic heater according to a first embodiment of the present invention, and Fig. 2 is an interior side view of a state where a port mounting tool 41 and a port mounting tool cover 42 are mounted in Fig. 1. Fig. 3 is an interior perspective view as viewed from a right, rearward and upward direction, Fig. 4 is an interior perspective view as viewed from a right, front and upward direction, Fig. 5(a) is an exterior perspective view as viewed from an outward, right, rearward and upward direction, and Fig. 5(b) is an exterior perspective view as viewed from a right, front and upward direction.

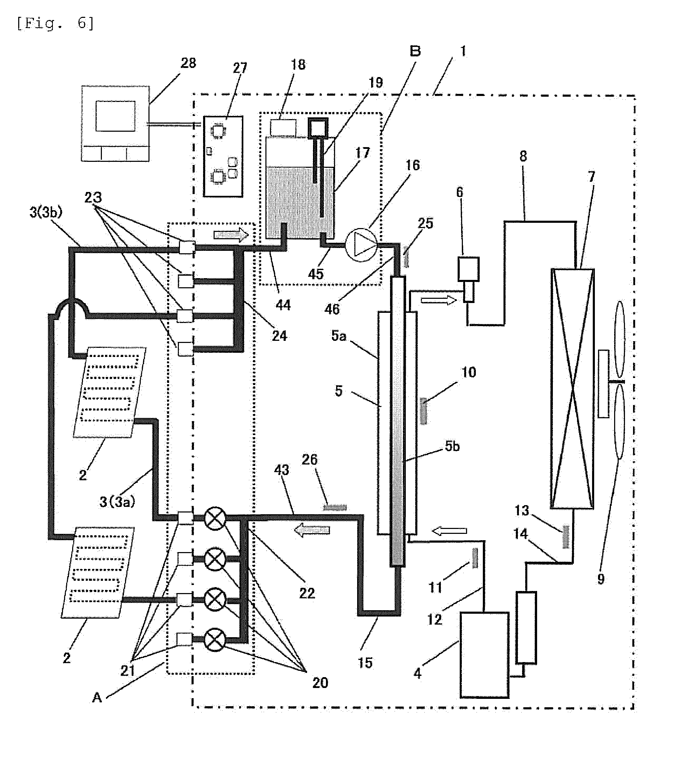

Fig. 6 is a refrigerant circuit and hot water circuit diagram of the heat pump hydronic heater. Figs. 1 to 5 show that the parts shown in Fig. 6 are incorporated to configure the heat pump hydronic heater.

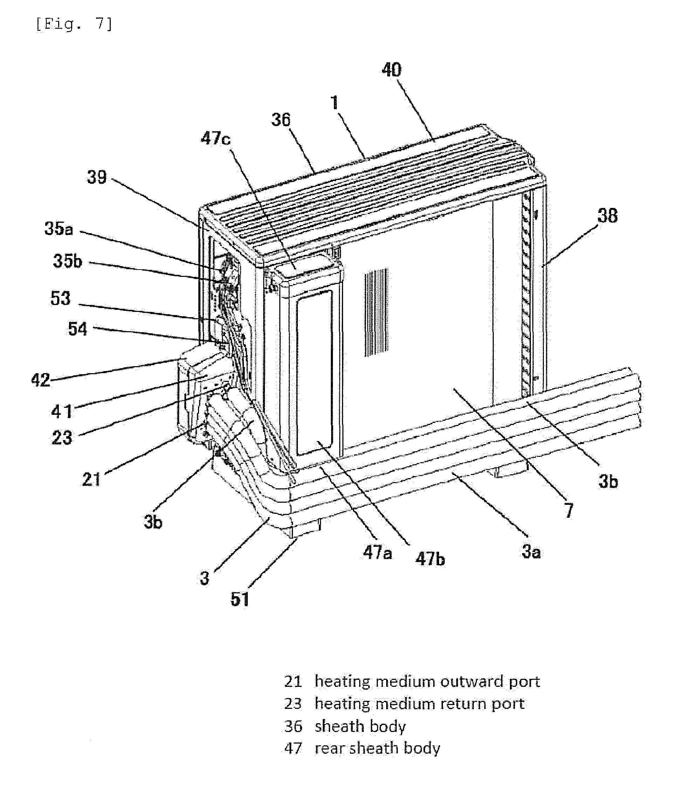

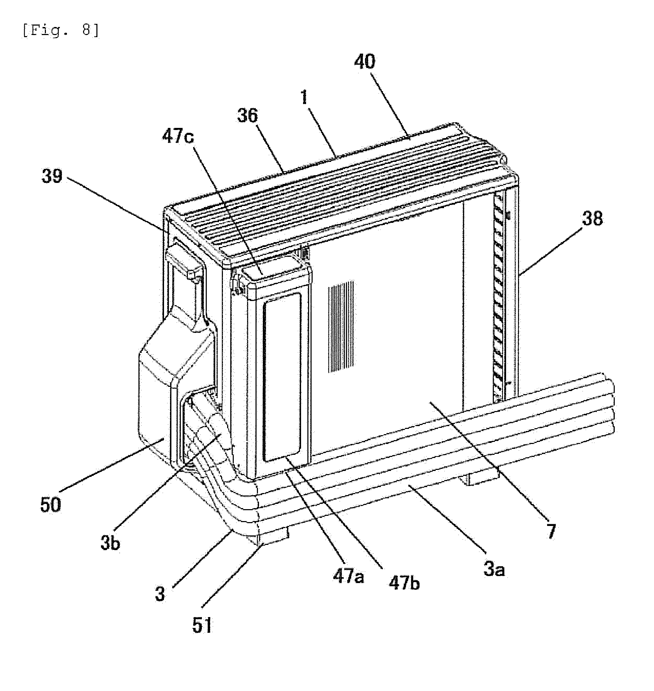

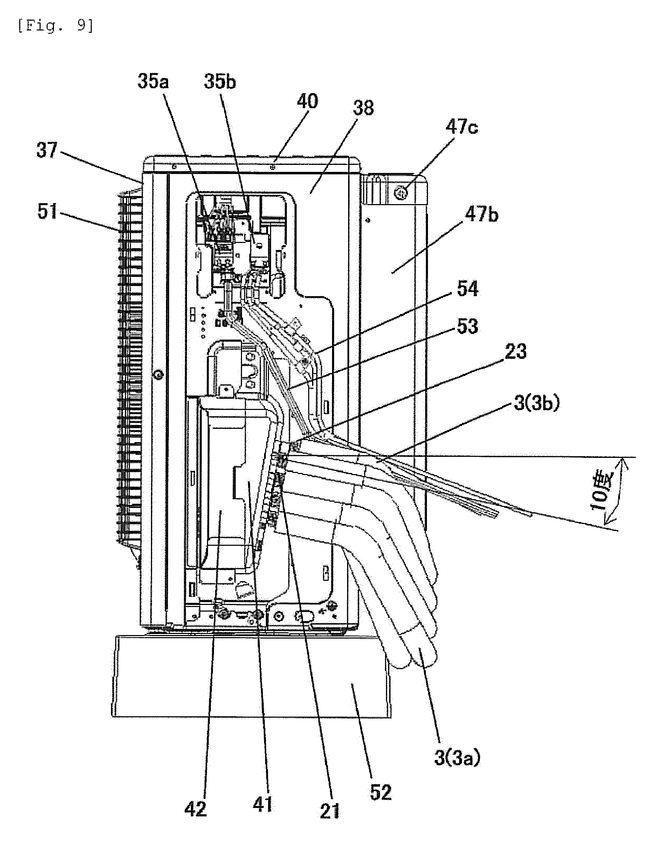

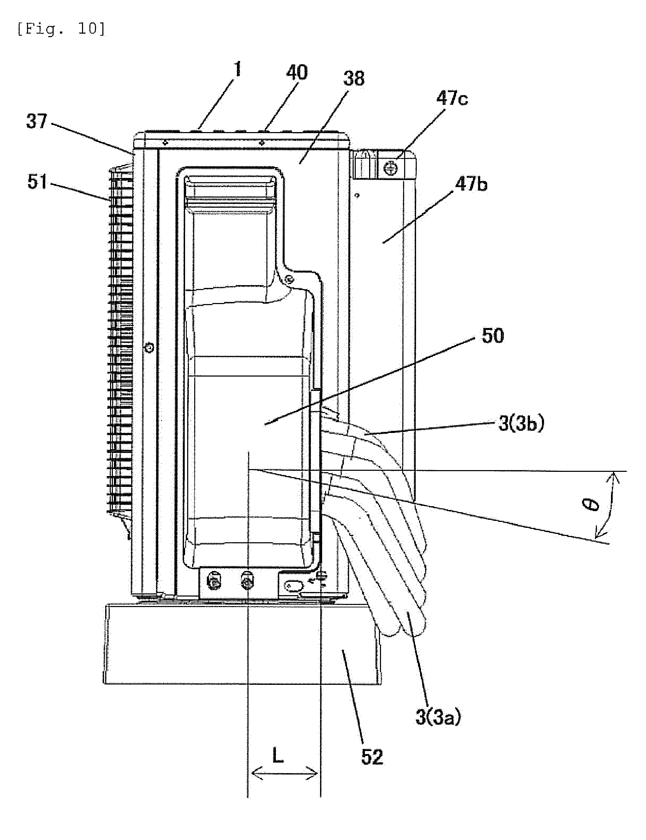

Fig. 7 is a working perspective view as viewed from a right, rearward and upward direction, and Fig. 8 is a working perspective view of a state where a pipe cover 50 is mounted in Fig. 7 as viewed from a right, rearward and upward direction. Fig. 9 is a working side view, and Fig. 10 is a working side view of a state where the pipe cover 50 is mounted in Fig. 9.

First, the first embodiment will be described based on Fig. 6 which is the refrigerant circuit and hot water circuit diagram of the heat pump hydronic heater.

The heat pump hydronic heater includes an outdoor unit 1 and external radiators 2. The outdoor unit 1 heats a heating medium such as water and antifreezing liquid. The external radiators 2 are connected to the outdoor unit 1 through heating medium pipes 3. The heating medium circulates through the outdoor unit 1 and the external radiators 2. Each of the external radiators 2 is a panel external radiator such as a floor heating system, but the external radiator 2 may be a radiator such as a fan convector including a panel heater or a blast fan 9. Each of the heating medium pipes 3 includes a heating medium outward pipe 3a and a heating medium return pipe 3b.
The heating medium heated by the outdoor unit 1 is sent to the external radiators 2 through the pipes 3 (heating medium outward pipe 3a), and warms up a room where the external radiator 2 is installed. In the heat pump hydronic heater, the outdoor unit 1 is a heat source thereof.

The outdoor unit 1 as the heat pump heat source is provided therein with the following parts.
The outdoor unit 1 includes a compressor 4 which compresses a refrigerant, a water refrigerant heat exchanger 5 which exchanges heat between a heating medium and a refrigerant, an expansion valve 6 which is decompressing means, and an evaporator 7. The compressor 4, the water refrigerant heat exchanger 5, the decompressing means 6 and the evaporator 7 are annularly connected to one another to configure a refrigerant circuit 8, and a refrigerant circulates through the refrigerant circuit 8.

The blast fan 9 conveys air to the evaporator 7, and promotes the heat-exchanging ability of the evaporator 7.
The water refrigerant heat exchanger 5 is formed from a copper pipe having high thermal conductivity, and is of double pipe structure including a refrigerant pipe 5a disposed on an outer side and a water pipe 5b disposed on an inner side. A refrigerant flows between an inner peripheral surface of the refrigerant pipe 5a and an outer peripheral surface of the water pipe 5b, and a heating medium flows in the water pipe 5b. A flowing direction of the refrigerant and a flowing direction of the heating medium are opposite from each other.
A condensation temperature sensor 10 is brazed to and mounted on the water refrigerant heat exchanger 5. A compressor outlet temperature sensor 11 is provided in a compressor discharge pipe 12 of the compressor 4. An air heat exchanging outlet temperature sensor 13 is provided in an air heat exchanging outlet pipe 14 of the evaporator 7.

The outdoor unit 1 includes a hot water circuit 15. The hot water circuit 15 includes a circulation pump 16. The circulation pump 16 is disposed upstream of the water refrigerant heat exchanger 5. The hot water circuit 15 is connected to the heating medium pipe 3, and the circulation pump 16 circulates a heating medium between the external radiator 2 and the water refrigerant heat exchanger 5.
A cistern 17 is disposed upstream of the circulation pump 16. The cistern 17 adjusts an amount of a heating medium which circulates through the water refrigerant heat exchanger 5, the hot water circuit 15, the heating medium pipe 3 and the external radiator 2. If the circulation amount becomes deficient, the cistern 17 replenishes the heating medium, and if the circulation amount increases due to expansion, the cistern 17 stores the heating medium.
The cistern 17 includes a cap 18 which opens for replenishing the heating medium, and a water level sensor 19 which detects a water level in the cistern 17.

An outward-side terminal of the hot water circuit 15 includes thermally-actuated valves 20. The plurality of external radiators 2 includes the thermally-actuated valves 20. The thermally-actuated valves 20 provided on the external radiator 2 which is used are opened, the thermally-actuated valves 20 provided in the external radiator 2 which is not used or the thermally-actuated valves 20 which are not connected to the external radiator 2 are closed, and control is performed such that hot water flows only to the required external radiator 2.
An outlet side of the hot water circuit 15 includes heating medium outward ports 21 which is integrally formed with the thermally-actuated valve 20, and an inlet side of the hot water circuit 15 includes heating medium return ports 23.
The heating medium outward ports 21 are provided downstream of the thermally-actuated valve 20, and the heating medium pipe 3 is connected to the heating medium outward ports 21. When all of the external radiators 2 are not used, the thermally-actuated valves 20 are closed.
Although the thermally-actuated valves 20 are used at four locations in Fig. 7, the thermally-actuated valve 20 may be used at one location or five or more locations.
An outward header pipe 22 divides the hot water circuit 15 into the plurality of circuits, and connects the plurality of thermally-actuated valves 20. When the number of thermally-actuated valves 20 is one, the thermally-actuated valve 20 is connected to the hot water circuit 15 without using the outward header pipe 22.

The heating medium return ports 23 are connected to the heating medium pipe 3. Hot water dissipates heat in the external radiator 2 and temperature thereof is lowered, and the hot water returns to the heating medium pipe 3. Then number of heating medium return ports 23 is the same as that of the thermally-actuated valves 20, and the number is four in Fig. 7. That is, when the thermally-actuated valve 20 is used at one location, the heating medium return port 23 is also used at one location.
The heating medium return ports 23 are connected to the hot water circuit 15 (return port heating medium pipe 44) through the return header 24. When the number of thermally-actuated valves 20 and the heating medium return ports 23 is one, the heating medium return ports 23 are connected to the hot water circuit 15 (return port heating medium pipe 44) without using the return header 24.

A water refrigerant heat exchanger inlet temperature sensor 25 measures temperature of a heating medium which enters the water refrigerant heat exchanger 5. A water refrigerant heat exchanger outlet temperature sensor 26 measures temperature of a heating medium on the side of the outlet of the water refrigerant heat exchanger 5.
A control device 27 controls various actuators and sensors of the heat pump hydronic heater. A remote control unit 28 is used when a user operates the heat pump water heater or carries out various setting operations.

Figs. 1 to 5 show the outdoor unit shown in the refrigerant circuit and hot water circuit diagram of the heat pump hydronic heater shown in Fig. 6, wherein Figs. 1 and 2 are side views, Figs. 3 and 4 are interior perspective view, and Figs. 5 is an external perspective view. The same members as those shown in Fig. 6 are designated with the same symbols.

As shown in Figs. 3 and 4, there is a bottom plate 29 at a lowermost portion of the outdoor unit 1, and the compressor 4 is placed on a right side on the bottom plate 29. The water refrigerant heat exchanger 5 is of a double pipe structure including the refrigerant pipe 5a disposed outside and the water pipe 5b. The water refrigerant heat exchanger 5 is placed on the bottom plate 29. The heating medium pipe 3 of the double pipe structure has a spiral shape so that the heat exchanger can be made compact.
The compressor discharge pipe 12 is connected to the water refrigerant heat exchanger 5. A refrigerant is compressed to a high pressure by the compressor 4 and is discharged out, and this refrigerant flows into the water refrigerant heat exchanger 5 from an uppermost front surface of the refrigerant pipe 5a.
A heating medium moves from the water pipe 5b located at a lower most portion to the water pipe 5b located above the former water pipe 5b and is heated. The heating medium is heated to high temperature and density thereof is lowered, and the heating medium is guided from the water pipe 5b located at the upper portion into the heating medium pipe 3, a buoyant force is added and power of the circulation pump 16 can be reduced. The hot water circuit 15 which connects the water refrigerant heat exchanger 5 the thermally-actuated valves 20 and the heating medium return ports 23 to each other passes through the front surface of the compressor 4.

The radiator heat insulator 30 shown in Fig. 4 includes a radiator upper heat insulator 30a and a radiator lower heat insulator 30b formed from heat insulator such as Styrofoam to enhance heat insulating properties of the water refrigerant heat exchanger 5. The water refrigerant heat exchanger 5 is sandwiched between the radiator upper heat insulator 30a and the radiator lower heat insulator 30b. The radiator lower heat insulator 30b is placed on the bottom plate 29 such that the radiator heat insulator 30 engages with concavity and convexity on a flat surface of the bottom plate 29.
A cover body 31 shown in Fig. 4 is disposed on an outer and upper side of the radiator heat insulator 30, and covers front, rear, left, right and upper surfaces of the radiator upper heat insulator 30a and the radiator lower heat insulator 30b. Although the radiator heat insulator 30 and another part are used as the cover body 31 in the drawing, the cover body 31 can also be used as the radiator heat insulator 30. Although portions of the radiator heat insulator 30 and the cover body 31 are cut so that the water refrigerant heat exchanger 5 can be seen in Fig. 4, the actual radiator heat insulator 30 and cover body 31 are not cut.

The evaporator 7 is bent into an L-shape to surround a rear side portion of the water refrigerant heat exchanger 5, and the evaporator 7 is placed on the bottom plate 29.
The blast fan 9 is disposed in the evaporator 7 and above the cover body 31, the blast fan 9 makes air forcibly pass through the evaporator 7, and promotes the heat exchange between the air and a refrigerant. A blast motor 32 drives the blast fan 9, and a motor stage 33 holds the blast motor 32. The motor stage 33 is fixed to an upper surface of the cover body 31.
A divider 34 isolates, from each other, a space in which the blast fan 9 and the water refrigerant heat exchanger 5 are disposed and a space in which the compressor 4 and the expansion valve 6 that is decompressing means are disposed.
The control device 27 is placed above the divider 34. A power supply line connection terminal 35a and a remote control connection terminal 35b are provided on the right side of the control device 27.
The various parts described above are accommodated in a sheath body 36 of a heat pump hydronic heater body. As shown in an external perspective view of Figs. 5, the sheath body 36 includes a front plate 37, a right plate 38, a left plate 39 and a ceiling plate 40. The front plate 37 which covers a front side, the right plate 38 which covers a right side and a right and rear side, and the left plate 39 which covers a left side are mounted on the bottom plate 29. The ceiling plate 40 which covers an upper side is placed on the front plate 37, the right plate 38 and the left plate 39.

In Figs. 1 and 2, the plurality of thermally-actuated valves 20 protrude outside of the right plate 38 and are vertically disposed at a location on a right side of the sheath body 36 and on a right and outer side of the compressor 4. When the number of thermally-actuated valves 20 is one, the one thermally-actuated valve 20 is disposed outside of the right plate 38. A heating medium is heated by the water refrigerant heat exchanger 5 and it becomes hot water, and the thermally-actuated valve 20 sends this heating medium to the external radiator 2 through the heating medium pipe 3.
Each of the thermally-actuated valves 20 is provided at its tip end with a heating medium outward port 21. The heating medium passes through the thermally-actuated valve 20 and the heating medium outward port 21, and is sent to the heating medium pipe 3 (see Fig. 7 for heating medium pipe 3).
The plurality of heating medium return ports 23 likewise protrude outside of the right plate 38 on a side of the thermally-actuated valves 20 and are vertically disposed side by side and oriented substantially horizontally with the thermally-actuated valves 20. A heating medium dissipates heat in the external radiator 2 and temperature thereof is lowered. This heating medium is returned to the hot water circuit 15 by the heating medium return port 23.
Openings of the heating medium outward ports 21 and the heating medium return ports 23 are oriented rearward of the sheath body 36.
The thermally-actuated valve 20, the heating medium outward port 21 which is integrally formed with the thermally-actuated valve 20, and the heating medium return port 23 disposed on an inner side of the heating medium outward port 21 are inclined downward from the horizontal direction by 10° or more such that connected portions (openings) thereof which are connected to the heating medium pipe 3 are oriented rearward. It is preferable that this downward inclination angle from the horizontal direction is 8° or more and 45° or less, especially 8° or more and 20° or less.

The thermally-actuated valves 20 and the heating medium return ports 23 are mounted on a port mounting tool 41. The port mounting tool 41 is fixed to the bottom plate 29. Mounting surfaces of the port mounting tool 41 with respect to the thermally-actuated valve 20 and the heating medium return port 23 are inclined. As a result, the thermally-actuated valve 20, the heating medium outward port 21 and the heating medium return port 23 are inclined rearward and downward by 10° or more. The port mounting tool cover 42 covers the port mounting tool 41 and is held by the port mounting tool 41.
The port mounting tool 41 and the port mounting tool cover 42 are mounted such that they protrude outward of the right side plate 38.

Hence, the thermally-actuated valve 20, the heating medium outward port 21 and the heating medium return port 23 are also disposed at locations protruding outward of the right side plate 38 in the convex forms.
That is, the thermally-actuated valves 20, the heating medium return ports 23, the port mounting tool 41 on which the thermally-actuated valves 20 and the heating medium return ports 23 are mounted, and the port mounting tool cover 42 are disposed at locations protruding sideway from the sheath body 36 of the heat pump hydronic heater.
The outward header pipe 22 is connected to the thermally-actuated valve 20, and the outward header pipe 22 and the water pipe 5b of the water refrigerant heat exchanger 5 are connected to each other through a thermally-actuated valve pipe 43 which is the hot water circuit 15. The water refrigerant heat exchanger outlet temperature sensor 26 is mounted on the thermally-actuated valve pipe 43.

The cistern 17 protrudes rearward of the right plate 38 existing behind the compressor 4. The return port heating medium pipe 44 is connected to a lower surface of the cistern 17. The return port heating medium pipe 44 is connected to the return header 24 which is integrally formed on the heating medium return port 23. A heating medium dissipates heat in the external radiator 2 and temperature thereof is lowered. The heating medium is guided to the cistern 17 by the return port heating medium pipe 44.
The cistern 17 functions to absorb volume expansion of the heating medium which is heated from low temperature to high temperature and whose volume is increased. Especially when antifreezing liquid having large volume expansion ratio is used as the heating medium, a capacity of the cistern 17 is determined so that the heating medium does not overflow.

The cap 18 is provided above the cistern 17. The cap 18 is detached and a heating medium is replenished to the cistern 17.
A slit is formed in a portion of the cap 18, and increased pressure in the cistern 17 is released from the slit.
When a heating medium more than prescribed amount is input to the cistern 17, expanded heating medium is made to overflow from the cap 18. Since the cistern 17 protrudes rearward from the right plate 38 located behind the compressor 4, the overflowing heating medium can be released outward.
The water level sensor 19 provided in the cistern 17 detects a water level in the cistern 17, and if the water level is lowered, the water level sensor 19 issues a warning to a user and displays the warming on the remote control unit 28, thereby urging the user to replenish the heating medium.
The circulation pump 16 is disposed below the cistern 17. Like the cistern 17, the circulation pump 16 protrudes toward a back surface of the right plate 38 located behind the compressor 4.

A pump outward pipe 45 which is pulled out from a lower portion of the cistern 17 is connected to the circulation pump 16 disposed below the cistern 17, and a heating medium such as water and antifreezing liquid flows through the pump outward pipe 45 from an upper side to a lower side.
That is, the cistern 17, the pump outward pipe 45 and the circulation pump 16 are disposed at positions protruding toward the back surface of the right plate 38 located behind the compressor 4.
The circulation pump 16 carries out operation such that hot water forcibly circulates through the hot water circuit 15. The water refrigerant heat exchanger 5 and the pump outward pipe 46 are connected to the circulation pump 16. A water refrigerant heat exchanger inlet temperature sensor 25 which measures temperature of hot water entering the water refrigerant heat exchanger 5 is mounted on the pump outlet pipe 46.

Figs. 5 are external perspective views of the heat pump hydronic heater in a state where the sheath body 36 is mounted. The circulation pump 16 and the cistern 17 are covered with a rear sheath body 47 which protrudes in a convex form rearward of the right plate 38 of the sheath body 36 behind the compressor 4. The rear sheath body 47 prevents water from entering the circulation pump 16 and the cistern 17 from outside. The rear sheath body 47 includes a rear bottom plate 47a, a rear side plate 47b and a rear upper plate 47c.

The circulation pump 16 disposed below the cistern 17 is placed on a pump stage 48. The pump stage 48 is fixed to the rear bottom plate 47a.
A vibration-isolating rubber 49 is mounted above the pump stage 48. The circulation pump 16 is placed on the vibration-isolating rubber 49. An upper portion of the circulation pump 16 is biased by the pump outward pipe 45 and the pump outlet pipe 46, and a lower portion of the circulation pump 16 is merely placed on the vibration-isolating rubber 49, the circulation pump 16 is not fixed using a screw, the flexibility of this configuration is high.

As shown in Fig. 6, a portion surrounded by a broken line A protrudes, in a convex form, rightward of the outdoor unit 1 on a side of the compressor 4. A portion surrounded by a broken line B is accommodated in the rear sheath body 47. The rear sheath body 47 is disposed behind the compressor 4, and is disposed behind the outdoor unit 1.

Referring back to Figs. 5, a pipe cover 50 is provided on a right and outer side of the right plate 38, and the port mounting tool 41 and the port mounting tool cover 42 are mounted on the right plate 38 inside the pipe cover 50. The thermally-actuated valves 20 and the heating medium return ports 23 are mounted on the port mounting tool 41, thereby likewise preventing water from entering from outside.
The pipe cover 50 is made of resin having ultraviolet light-transmission preventing effect, thereby preventing ultraviolet light from entering the pipe cover 50 as low as possible. To exert the ultraviolet light-transmission preventing effect, thermoplastic resin in which ultraviolet light absorbent such as titanium oxide and zinc oxide is used. According to this configuration, transmittance of ultraviolet light (Tuv) is lowered.
The pipe cover 50 may be made of sheet metal. In the case of the sheet metal, ultraviolet light and visible light can not pass through the sheet metal.

The front plate 37 of the sheath body 36 is provided with a transfer port 37a which is concentric with the blast fan 9. The transfer port 37a is provided with a bell mouth 37b. The bell mouth 37b has a squeezed or narrowed shape which is concentric with the blast fan 9, and which is curved in a substantially semi-circular radially outward form from its inner peripheral.
If the blast fan 9 rotates, air is sucked from the evaporator 7 and is discharged out from the transfer port 37a of the front plate 37, thereby exchanging heat.
A transfer grille 51 has a grid-shaped opening through which wind from the blast fan 9 passes. The transfer grille 51 is provided such that it protrudes forward of the transfer port 37a of the front plate 37, and the transfer grille 51 rectifies wind, thereby reducing noise, and also functions to protect such that a hand does not touch the blast fan 9.

Figs. 7 to 10 are working diagrams in which the heating medium pipes 3 are mounted on the outdoor unit 1, Fig. 8 is a diagram showing that the pipe cover 50 is mounted in Fig. 7, and Fig. 10 is a side view showing that the pipe cover 50 is mounted in Fig. 9.

An outdoor unit 1 is placed on a block base 52, and the outdoor unit 1 is held such that it floats by about 100 mm. The block base 52 is generally made of concrete or resin.
A power supply line 53 is connected to the power supply line connection terminal 35a, and supplies a power supply to the outdoor unit 1. A remote control line 54 is connected to the remote control connection terminal 35b, supplies a power supply to the remote control 28, and sends and receives data.
The heating medium pipe 3 is mounted on the heating medium outward port 21 and the heating medium return port 23. An interior of the heating medium pipe 3 is a crosslinked polyethylene pipe, and a heat insulator is provided outside of the crosslinked polyethylene pipe. A crosslinked polyethylene pipe of φ10 is mainly used.
The heating medium pipe 3 is connected to the external radiator 2, a heating medium heated by the outdoor unit 1 is sent from the heating medium outward port 21 to the external radiator 2 through the heating medium outward pipe 3a, thereby warming up a room. The heating medium whose heat is exchanged there and whose temperature is lowered passes through a heating medium return pipe 3b, returns to the heating medium return port 23, and the heating medium is again heated in the outdoor unit 1, and these operations are repeated.

The heating medium outward pipe 3a is connected to the heating medium outward port 21 disposed on an outer side of the port mounting tool 41, and the heating medium return pipe 3b is connected to the heating medium return port 23 disposed on an inner side of the port mounting tool 41. The thermally-actuated valve 20, the heating medium outward port 21 and the heating medium return port 23 are inclined downward by about 10° such that their connected portions (openings) connected to the heating medium pipe 3 are oriented rearward. According to this configuration, the heating medium pipe 3 (heating medium outward pipe 3a, heating medium return pipe 3b) is connected in a state where the heating medium pipe 3 is inclined downward by about 10°. Thereafter, the heating medium pipe 3 is routed rightward, leftward or straightly as it is, and is connected to the external radiator 2.

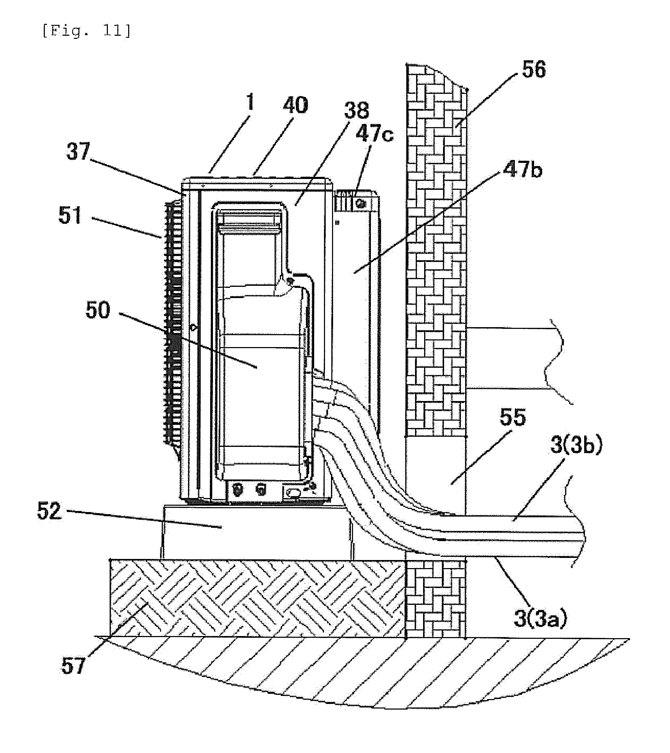

Fig. 7 shows a state where the heating medium pipe 3 (heating medium outward pipe 3a, heating medium return pipe 3b) is routed in the right direction (left direction if the body is viewed from front) of the back surface of the of the evaporator 7, but the heating medium pipe 3 is routed in the left direction (right direction if the body is viewed from front) on the contrary in some cases, and the heating medium pipe 3 is routed straightly as it is in some cases. Fig. 11 shows a state where the heating medium pipe 3 is routed straightly as it is. However, as shown in Fig. 7, it is most difficult to route the heating medium pipe 3 in the left direction of the outdoor unit 1. It is necessary to avoid a case where the heating medium pipes 3 close the evaporator 7, an area of the evaporator 7 is reduced, a heat exchanging amount is reduced and efficiency is deteriorated.
Fig. 8 shows a state where after the heating medium pipes 3 (heating medium outward pipes 3a, heating medium return pipes 3b), the power supply line 53 and the remote control line 54 are mounted, the pipe cover 50 is mounted. The pipe cover 50 has ultraviolet light-transmission preventing effect, and the heating medium pipe 3 located on the inner side of the pipe cover 50 is not irradiated with ultraviolet light.

As shown in Fig. 7, at the time of construction, it is necessary mount the heating medium pipe 3, the power supply line 53 and the remote control line 54 on the outdoor unit 1. Thereafter, as shown in Figs. 8 and 10, it is necessary that the pipe cover 50 is mounted and the connected portions of the heating medium outward pipe 3a and the heating medium return pipe 3b are accommodated in the pipe cover 50.
In the construction, the outdoor unit 1 is first placed on the block base 52 (or placement stage).
Next, the power supply line 53 is connected to the power supply line connection terminal 35a, and the remote control line 54 which is connected to the remote control 28 is connected to the remote control connection terminal 35b.
Further, the heating medium outward pipe 3a connected to the external radiator 2 is connected to the heating medium outward port 21 which is inclined rearward and downward by about 10°, and the heating medium return pipe 3b is connected to the heating medium return port 23 which is likewise inclined rearward and downward by about 10° in substantially the horizontal direction of the heating medium outward port 21. Hence, the heating medium pipe 3 (heating medium outward pipe 3a, heating medium return pipe 3b) is connected such that the heating medium pipe 3 is inclined downward by about 10°, and the heating medium pipe 3 is then routed in a predetermined direction.
After the heating medium pipe 3 is connected, the pipe cover 50 is mounted. As a result, the connected portion can not be seen from outside due to the pipe cover 50.
Lastly, the cap 18 of the cistern 17 is opened, and a heating medium is poured to a predetermined amount. At this time, the circulation pump 16 disposed below the cistern 17 is operated, and the heating medium is uniformly distributed to the hot water circuit 15, the heating medium pipe 3 and the external radiator 2.
The construction is completed.

The operation of the heat pump hydronic heater will be described based on the drawings.
If the operation of the outdoor unit 1 is started by the remote control 28, the compressor 4 is operated. Then, a refrigerant is compressed to a high pressure and is discharged. The refrigerant passes through the compressor discharge pipe 12, and is sent to the water refrigerant heat exchanger 5, and exchanges heat with a heating medium which is sent by the circulation pump 16 and the refrigerant dissipates heat. According to this operation, the heated heating medium is changed from a low temperature heating medium to a high temperature heating medium.
A refrigerant which flows out from the water refrigerant heat exchanger 5 is decompressed and expanded by the expansion valve 6, is sent to the evaporator 7, exchanges heat with air which is sent by the blast fan 9, and while the refrigerant passes through the evaporator 7, the refrigerant is evaporated and gasified. The gasified refrigerant is sucked into the compressor 4, is again compressed, and this process is repeated, and the low temperature heating medium which passes through the water refrigerant heat exchanger 5 is gradually heated.

Concerning the hot water circuit 15, a heating medium is heated in the water refrigerant heat exchanger 5 by operating the circulation pump 16, the heated heating medium is forcibly sent to the outward header pipe 22, the heating medium is divided into a plurality of locations (four locations in the drawing, but the heating medium is not divided in some cases), and they are sent to the thermally-actuated valves 20.
One of the thermally-actuated valves 20 through which a heating medium flows to the external radiator 2 is set by the remote control unit 28, the set thermally-actuated valve 20 is opened, and other thermally-actuated valves 20 are closed. A heating medium passes through a pipe which is provided outside of the outdoor unit 1 via the thermally-actuated valve 20 and the heating medium outward port 21, and the heating medium is guided into the external radiator 2. The heating medium dissipates heat in the external radiator 2, and warms up a room where the external radiator 2 is installed.
The heating medium which dissipates heat in the external radiator 2 and whose temperature is lowered passes through the pipe 3, and passes through the heating medium return pipe 3b and flows toward the heating medium return port 23 which is disposed inward of the heating medium outward port 21 in a substantially horizontal direction. The heating medium passes through the heating medium return port 23 and the return header 24, passes through the return port heating medium pipe 44 and enters the cistern 17 from a lower surface of the cistern 17. A constant amount of heating medium such as water and antifreezing liquid exists in the cistern 17 such that an air layer exists above the heating medium.

Thereafter, the heating medium similarly passes through the pump outward pipe 45 from the lower surface of the cistern 17, is forcibly sucked into the circulation pump 16, and is forcibly sent to the pump outlet pipe 46 by the circulation pump 16, and the heating medium whose temperature is lowered is heated by the water refrigerant heat exchanger 5, and is again guided into the external radiator 2, and these operations are repeated, and the heating medium such as water and antifreezing liquid which dissipates heat in the external radiator 2 warms up a room.

In the construction, each of the heating medium pipes 3 (heating medium outward pipes 3a, heating medium return pipes 3b) which is inclined downward by about 10° is first mounted rearwardly on a convex portion of a right side of the outdoor unit 1, and the pipe cover 50 is mounted on the pipe 3. A method for this operation is substantially the same as construction of an air conditioner (in the case of the air conditioner, a pipe for connecting between the outdoor unit and the indoor unit is mounted in the same manner).
Therefore, since the above convex portion is substantially equal to a location where a refrigerant pipe is connected in the air conditioner, even a non-skilled construction operator can easily construct.
It is general to insert the heating medium pipes 3 (heating medium outward pipes 3a, the heating medium return pipes 3b) into the heating medium outward ports 21 or the heating medium return ports 23 and fix the heating medium pipes 3 using hardware. Therefore, no tool is required and workability is easier than that of the air conditioner. Therefore, a construction operator can more easily operate in the same manner as that of the air conditioner, and the operability is largely enhanced.

Especially at the time of construction, it is necessary to mount each of the heating medium pipes 3 (heating medium outward pipes 3a, heating medium return pipes 3b) on the heating medium outward port 21 and the heating medium return port 23, but since the heating medium outward port 21 and the heating medium return port 23 are swell in convex forms sideway, it is easy to connect the heating medium pipes 3 (heating medium outward pipes 3a, heating medium return pipes 3b). Hence, the workability is enhanced, and construction time can be shortened.

When the heating medium pipe 3 (heating medium outward pipe 3a, heating medium return pipe 3b) is routed in the left direction of the outdoor unit 1, there is fear that the heating medium pipe 3 closes the evaporator 7 but as shown in Figs. 7 and 8, the heating medium pipe 3 is mounted rearward on the right side of the outdoor unit 1 of the heat pump hydronic heater such that the heating medium pipe is inclined downward by about 10°, and the heating medium pipe (heating medium outward pipe 3a, the heating medium return pipe 3b) is made to pass below the rear sheath body 47 which protrudes in a convex form rearward of the outdoor unit 1. According to this configuration, it is possible to prevent the heating medium pipe 3 (heating medium outward pipe 3a, the heating medium return pipe 3b) from being disposed on the upper side, and to prevent the heating medium pipe 3 (heating medium outward pipe 3a, the heating medium return pipe 3b) from closing the evaporator 7. It is possible to avoid a case where an amount of air which passes through the evaporator 7 is reduced, performance is deteriorated and power consumption increases, and it is possible to obtain the heat pump hydronic heater having excellent energy-saving technology.

Since each of the heating medium pipes 3 (heating medium outward pipe 3a, heating medium return pipe 3b) is inclined downward by about 10°, it is possible to increase the radius of curvature of the heating medium pipe 3. If the heating medium pipe 3 is disposed substantially horizontally, there is a possibility that the heating medium pipe 3 abuts against the rear sheath body 47 which protrudes rearward of the outdoor unit 1 in the convex form. However, since the heating medium pipe 3 is inclined downward, the heating medium pipe 3 easily passes below the rear sheath body 47.

In the case of the heat pump hydronic heater, a crosslinked polyethylene pipe of φ10 is used as the heating medium pipe 3 in many cases, and it is possible to secure a radius of curvature of R150 or higher which is regarded as a desired value. As a result, a crosslinked polyethylene pipe does not become bleached, and construction capable of maintaining a state where the heating medium pipe is not deteriorated for long periods can be carried out.
As shown in side views in Figs. 9 and 10, an irrational force is not applied to the heating medium pipe 3 and the heating medium pipe 3 can smoothly be routed.

In the above description, the heating medium pipe 3 is routed toward the back surface of the evaporator 7, but when the heating medium pipe 3 is routed in the opposite direction, if the heating medium pipe 3 is routed along a surface where the outdoor unit 1 of the heat pump hydronic heater is disposed as close as possible, this is excellent in terms of exterior. In this case also, if the heating medium outward port 21 and the heating medium return port 23 are inclined downward by about 10° and the heating medium pipe 3 is connected to these ports, it is possible to smoothly route the heating medium pipe 3 toward the installation surface. According to this configuration, it becomes easy to secure a predetermined minimum radius of curvature.

Fig. 11 show a state where the heating medium pipe 3 is disposed straightly. In Fig. 11, the heating medium pipe 3 (heating medium outward pipe 3a, heating medium return pipe 3b) is routed rearward of the outdoor unit 1.
When the external radiator 2 is a floor heating system, the heating medium pipe 3 is routed to an underfloor ventilating opening 55 and is connected to an external radiator 2 in a house. The underfloor ventilating opening 55 is provided in a wall 56 of the house.
A block base 52 is placed on a base portion 57, the outdoor unit 1 is placed on the block base 52, and construction of the heating medium pipe 3 is carried out. As shown in Fig. 11, by rearwardly and downwardly inclining the heating medium outward port 21 and the heating medium return port 23, the heating medium pipe 3 can smoothly be routed under a floor. According to this configuration, the construction can easily be carried out without applying an irrational force to the heating medium pipe 3.

When the heating medium pipes 3 (heating medium outward pipes 3a, heating medium return pipes 3b) connected to the heating medium outward ports 21 and the heating medium return ports 23 are routed in the left direction of the outdoor unit 1, and the heating medium outward ports 21 are disposed outward of the heating medium return ports 23. Therefore, when the heating medium pipes 3 are routed toward the back surface of the outdoor unit 1, a high temperature heating medium which flows out from the heating medium outward ports 21 passes outward, heat of the heating medium is exchanged by the external radiator 2, and temperature of the heating medium is lowered. The low temperature heating medium passes through the heating medium return pipe 3b, passes in the vicinity of the outdoor unit 1 and the evaporator 7, and returns to the heating medium return port 23.

The evaporator 7 is in a low temperature state. The heating medium outward pipe 3a through which a high temperature heating medium flows is disposed at a location separated from the low temperature evaporator 7. The heating medium return pipe 3b whose temperature is lowered is disposed at an inner location. According to this configuration, a high temperature side of the heating medium outward pipe 3a is not cooled, the heating medium is sent to the external radiator 2 while maintaining its high temperature. The heating medium which dissipates heat in the external radiator 2 passes through a position close to the evaporator 7, temperature of the heating medium is further lowered and the heating medium is sent to the water refrigerant heat exchanger 5. Hence, COP can be enhanced and the energy-saving technology can further be enhanced.

In addition, the plurality of heating medium outward ports 21 and heating medium return ports 23 are provided (four in Figs. 1 and 3 as one example). Since the plurality of heating medium outward ports 21 and heating medium return ports 23 are vertically disposed side by side, the heating medium pipes 3 connected to the heating medium outward ports 21 and heating medium return ports 23 can compactly be accommodated below the outdoor unit 1, it becomes easy to route the heating medium pipes 3, and workability is enhanced.

Since the heating medium outward ports 21 and the heating medium return ports 23 are arranged side by side in the substantially horizontal direction, the heating medium pipes 3 (heating medium outward pipes 3a, heating medium return pipes 3b) connected to the heating medium outward port 21 and the heating medium return port 23 can be routed substantially in parallel to each other.
Hence, it is easy to route the heating medium pipes 3. Especially if the heating medium outward ports 21 and the heating medium return ports 23 are disposed at lower location as low as possible on the right side of the outdoor unit 1, the heating medium pipes 3 does not close the evaporator 7 even when the heating medium pipes 3 are routed toward the evaporator 7, and performance is not deteriorated.

In addition, at the time of the construction, as shown in Fig. 6, after the heating medium pipe 3 (heating medium outward pipe 3a, heating medium return pipe 3b) is mounted, the heating medium outward port 21 and the heating medium return port 23 are mounted, and they are covered with the pipe cover 50 as shown in Fig. 7.
The crosslinked polyethylene pipe is mainly used as the heating medium pipe 3, a heat insulator is provided around the crosslinked polyethylene pipe as a covering material. It is known that the crosslinked polyethylene pipe is deteriorated by ultraviolet light such as sunlight, and there is fear that the crosslinked polyethylene pipe is cracked and water leaks.
Hence, heat insulation property is enhanced by the heat insulator, and the crosslinked polyethylene pipe is protected against the ultraviolet light.
A connected portion of the crosslinked polyethylene pipe (heating medium pipe 3) with respect to the heating medium outward port 21 and the heating medium return port 23 has no heat insulator. Hence, by providing the pipe cover 50 having ultraviolet light-transmission preventing effect, it is possible to shield the connected portion from the sunlight, and it is possible to prevent the deterioration and secure quality for long periods. When the pipe cover 50 is made resin, it is desirable that ultraviolet light absorbent is mixed so that the ultraviolet light does not enter inside.

Even if the heat insulator which is the covering material of the heating medium pipe 3 is deviated and the crosslinked polyethylene pipe is bared, since the heating medium outward port 21 and the heating medium return port 23 are inclined rearward and downward and the crosslinked polyethylene pipe is accommodated in the pipe cover 50, it is possible to prevent the crosslinked polyethylene pipe from being exposed directly to the sunlight and from being irradiated with the ultraviolet light.
That is, as shown in Figs. 9 and 10, by inclining the heating medium outward port 21 and the heating medium return port 23, the heat insulator of the heating medium pipe 3 in the pipe cover 50 can be made long. If the heating medium pipe 3 is inclined by an angle θ and a length L thereof is accommodated in the pipe cover 50 in the horizontal direction as shown in Fig. 10, a length of L×1/cosθ is accommodated in the pipe cover 50 by inclining the heating medium pipe 3 rearward and downward. Therefore, the length can be longer than the length L which is a value when the heating medium pipe 3 is routed in the horizontal direction.
It can be considered that the heating medium pipe 3 is inclined upward of course, but since the heating medium pipe 3 is routed under floor in most of cases as shown in Fig. 11, it is effective to incline the heating medium pipe rearward and downward and to provide the heating medium outward port 21 and the heating medium return port 23.
Although the pipe cover 50 is made of resin in the above description, the pipe cover 50 may be made of sheet metal. In the case of the sheet metal, ultraviolet light can not pass through the sheet metal.

The power supply line 53 and the remote control line 54 for the remote control 28 are also connected to the power supply line connection terminal 35a and the remote control connection terminal 35b on the right side of the outdoor unit 1. Hence, it is necessary to secure a constant distance from the sidewall as a maintenance space, but if the heating medium pipe 3 is routed rightward, its space can be utilized effectively.

The heating medium outward port 21 has the thermally-actuated valve 20 which opens and closes the circulation of the heating medium, the thermally-actuated valve 20 opens and closes in accordance with the external radiators 2 which are used, and the thermally-actuated valve 20 is controlled so that a heating medium flows only to a necessary external radiator 2. An amount of heated heating medium which should flow can be controlled in accordance with status of use of the external radiator 2, and usability and energy-saving technology are enhanced.

The rear sheath body 47 is provided behind the outdoor unit 1, and the pipe cover 50 is provided on the right side of the outdoor unit 1. Therefore, the outdoor unit 1 does not become extremely large. Therefore, increase in cost can be suppressed and cost can be reduced.
The rear sheath body 47 of the outdoor unit 1 located at the rear position becomes large as compared with the air conditioner which is a base, but a projected area is not largely varied, packaging capacity is extremely increased, custody charge at the time of storage in warehouse is suppressed to the minimum, and the cost can be reduced.

The present invention is extremely effective for maintaining the heat pump hydronic heater body as compact as possible, reducing noise and vibration, enhancing the performance, and enhancing the maintenance performance.

### [Industrial Applicability]

As described above, according to the heat pump hydronic heater of the invention, workability is high, and the efficiency is enhanced. Therefore, the heat pump hydronic heater of the invention is used for a heating system such as a floor heating system and a hot-water heating system.

## Claims

1. A heat pump hydronic heater in which a compressor, a water refrigerant heat exchanger, decompressing means and an evaporator which configure a refrigerant circuit are accommodated in a sheath body,
the sheath body has a heating medium outward port and a heating medium return port connected to the water refrigerant heat exchanger through a hot water circuit,
the heating medium outward port and the heating medium return port are connected to an external radiator through a heating medium pipe,
a heating medium heated by the water refrigerant heat exchanger circulates in the external radiator, and the heating medium dissipates heat in the external radiator, **characterized in that**
the heating medium outward port and the heating medium return port are inclined rearward and downward, and are disposed on a side of the sheath body.

2. The heat pump hydronic heater according to claim 1, **characterized in that** the heating medium outward port and the heating medium return port are inclined rearward and downward by 8° or more and 20° or less with respect to a horizontal direction.

3. The heat pump hydronic heater according to claim 1 or 2, **characterized in that** the heating medium outward port is disposed outside of the sheath body, and the heating medium return port is disposed inside of the sheath body.

4. The heat pump hydronic heater according to any one of claims 1 to 3, further comprising at least one more heating medium outward port and at least one more heating medium return port, **characterized in that** the plurality of heating medium outward ports are arranged side by side in a vertical direction, and the plurality of heating medium return ports are arranged side by side in the vertical direction.

5. The heat pump hydronic heater according to any one of claims 1 to 4, further comprising a cistern in which the heating medium is stored, and a circulation pump which circulates the heating medium, **characterized in that** the circulation pump and the cistern are disposed such that they project rearward of the sheath body.

6. The heat pump hydronic heater according to any one of claims 1 to 5, **characterized in that** the heating medium outward port is a thermally-actuated valve.

7. The heat pump hydronic heater according to any one of claims 1 to 6, further comprising a pipe cover which covers the heating medium outward port and the heating medium return port, **characterized in that** the pipe cover is made of resin having ultraviolet light-transmission preventing effect.
